# EUROPEAN PATENT SPECIFICATION

(11) **EP 3 389 976 B1**
(45) Date of publication and mention of the grant of the patent: **14.07.2021**
(21) Application number: 16822415.2
(22) Date of filing: 15.12.2016
(51) Int. Cl.: B29C 45/14, B32B 15/04, B32B 15/088, B32B 27/34

(54) **PROCESS FOR PLASTIC OVERMOLDING ON A METAL SURFACE AND PLASTIC-METAL HYBRID PART**
VERFAHREN ZUM PLASTISCHEN UMGIESSEN AUF EINER METALLFLÄCHE UND HYBRIDES KUNSTSTOFF-METALL-TEIL
PROCÉDÉ DE SURMOULAGE PLASTIQUE SUR UNE SURFACE MÉTALLIQUE ET PIÈCE HYBRIDE PLASTIQUE-MÉTAL

(30) Priority: 17.12.2015 WO PCT/EP2015/200711; 29.01.2016 CN 201610064815
(43) Date of publication of application: 24.10.2018
(73) Proprietor: DSM IP Assets B.V., 6411 TE Heerlen (NL)
(72) Inventor: VAN DER BURGT, Frank Peter Theodorus Johannes, 6100 AA Echt (NL); LIAO, Ruogu, 6100 AA Echt (NL); YU, Bin, 6100 AA Echt (NL); PAN, Wei, 6100 AA Echt (NL)
(74) Representative: DSM Intellectual Property
(86) International application number: PCT/EP2016/081189
(87) International publication number: WO 2017/102943

(56) References cited:
- EP-A1- 2 572 876
- US-A1- 2012 108 130
- US-A1- 2013 022 786

## Description

The invention relates to a process for manufacturing a plastic-metal hybrid part by plastic overmolding on a metal surface via nano-molding technology (NMT). The invention also relates to a plastic-metal hybrid part obtained by a nano-molding technology (NMT) process, wherein the hybrid part comprises a plastic material bonded to a surface area of a metal part.

Nano-molding technology is a technology wherein a plastic material is bonded to a metal part to form a so-called plastic-metal hybrid part, wherein the bonding strength at the metal-plastic interface results from or is enhanced by a pretreatment of the metal resulting in a surface area with surface irregularities of nano-size dimensions. Such irregularities have dimensions in the range of about a few nanometers up to a few hundreds of nanometers and suitably have a shape of ultrafine asperities, recesses, projections grains and pores.

For the NMT metal pretreatment different technologies and different combinations of treatment steps can be applied. An NMT process that is mostly used is the process comprising a so-called "T-treatment". In the "T-treatment" developed by Taisei Plas, the metal is fine etched with an aqueous solution of a water soluble amine, such as ammonia or hydrazine. Generally such solutions are applied with a pH of around 11. Such a process is described, for example, in patent applications US20060257624A1, CN1717323A, CN1492804A, CN101341023A, CN101631671A, and US2014065472A1. In the latter document the aluminum alloy obtained after the etching step in the aqueous ammonia or hydrazine solution had a surface characterized by ultrafine asperities of 20 to 80 nm period or ultrafine recesses or projections of 20 to 80 nm.

Another NMT metal pretreatment method comprises an anodizing treatment. In the anodizing treatment, the metal is anodized in an acidic solution to form a corroded layer with a porous metal oxide finish to form a kind of interpenetrated structure with the plastic material. Such a process is described, for example, in patent applications US20140363660A1 and EP2572876A1. In the latter document an example of an aluminum alloy formed by anodizing is described which is covered with a surface having holes, the openings of which have a number average inner diameter of 10 to 80 nm as measured under electron microscope observation.

Each of these processes may be combined with multiple steps, for example in combination with other etching, neutralizing and rinsing steps, and/or with the use of a primer, applied on the metal substrate prior to the metal substrate being overmolded with the plastic material. Finally, the metal part is inserted into a mold wherein resin is injected and bonded directly on the treated surface.

In the NMT process as developed by TaiseiPlas, a metal sheet is etched by dipping the metal sheet into an alkaline solution. The alkaline solution is indicated as T-solution and the dipping step is indicated as T-treatment step.

According to US patent US8858854B1, the anodizing treatment has specific advantages over NMT processes comprising multi-stage pretreatment steps wherein the metal part is subjected to multiple chemicals baths including degreasing agents, acid solutions, base solutions, and lastly submerged in a T-solution and rinsed in diluted water. In the terminology of US8858854B1, NMT is limited to the process including the T-treatment step.

In the present invention, with the terms "nano-molding technology (NMT)" and "NMT process", is understood any overmolding of a metal subjected to a pretreatment process that results in metal a surface area with surface irregularities of nano-size dimensions, and thus includes both the anodizing method of US8858854B1 and the T-treatment solution of Taisei Plas, as well as other alternatives.

The polymers most widely used in plastic-metal hybrid parts made by NMT technology are polybutylene terephthalate (PBT) and polyphenylene sulfide (PPS). In US patent application US2014065472A1 / US patent US9166212B1 it is mentioned that "when the resin composition contained PBT or PPS as the main component, optionally compounded with a different polymer, and further contained 10 to 40 mass % of a glass fiber, it exhibited very strong joining strength with aluminum alloy. In the condition where the aluminum and resin composition were both plate shaped and joined to each other in an area of 0.5 to 0.8 cm² the shear fracture was 25 to 30 MPa. In the case of a resin composition where different polyamides were compounded the shear fracture was 20 to 30 MPa." For the preparation of the metal surfaces in the plastic-metal hybrid parts of US2014065472A1 / US9166212B1 a "T-treatment" step, followed by an additional amine adsorption step were applied.

US2012108130A1 relates to plastic parts produced by overmolding a first plastic part with a second plastic material, not including a metal part, and further focuses on the flexural properties of the overmolded plastic part. This document describes that the overmoulded part contains a surface component that is adhered to a matrix component, and wherein said components are identical or different and are selected from PA comprising a blend of semi-aromatic semi-crystalline PA with semi-aromatic amorphous polyamide.

In patent application EP2572876A1, mentioned here before, a polyamide composition, comprising PA-66/6T/6l (in the wt. ratio12/62/26) and 30 wt.% glass fibers, was applied on different NMT metal surfaces. Where the metal treatment comprised a T-treatment, the pore size was 25 nm. In case of anodizing treatment the pore size was 17 nm. For both hybrid systems, the bonding force was measured to be 25.5 MPa.

In view of the increasing importance of miniaturization and automation of processes, there is a need for reducing the number of parts in assembled products, for integrating of functions of different parts and for improving the connection between different parts in such assemblies. The NMT process provides a very useful technology for combining plastic parts and metal parts being assembled by an integrated process, comprising shaping and assembling in one step, by overmolding of a plastic material on a metal surface while simultaneously arriving at a reasonable bonding force via nano-molding technology. However, there is a need for improving the bonding force and for extending the technology to other materials in order to enable the exploitation of said technology more widely.

Therefore the aim of the present invention has been to provide a process and plastic-metal hybrid parts resulting thereof, wherein the bonding strength is increased.

This aim has been achieved with the process according to the invention and with the plastic-metal hybrid parts according to the invention and obtainable by such process.

The process according to the invention is directed to the manufacturing of a plastic-metal hybrid part by overmolding a moldable plastic material on a metal surface via nano-molding technology (NMT), comprising steps of
i) providing a metal substrate having a surface area with surface irregularities of nano-size dimensions;
ii) providing a polyamide composition;
iii) forming a plastic structure on the metal substrate by molding said polyamide composition directly on at least a part of the surface area with the surface irregularities of the metal substrate;
wherein the polyamide composition comprises
a. a semi-crystalline semi-aromatic polyamide and
b. an amorphous semi-aromatic polyamide.

The effect of the process according to the invention, wherein a blend of a semi-crystalline semi-aromatic polyamide (sc-PPA) and an amorphous semi-aromatic polyamide (am-PPA) is used, is that the bonding force at the interface between the metal part and the plastic part is increased. In fact the bonding force is not only better than that of the polyamide based systems as reported herein above, but also better than the values reported for PBT and PPS based systems mentioned herein above.

Herein the polyamide composition is suitably molded on at least a part of the surface area with surface irregularities of nano-size dimensions. The metal substrate may also have multiple surface areas with surface irregularities of nano-size dimensions, in which at least one surface area, or at least a part thereof is overmolded with the polyamide composition.

For the metal substrate having a surface area with surface irregularities of nano-size dimensions, any metal substrate suitable for NMT technology may be employed in the present invention.

The pretreatment process applied for preparing the metal substrate used in the process according to the invention, may by any process suitable for preparing a surface area with surface irregularities of nano-size dimensions. Suitably, such a process comprises multiple pretreatment steps. Suitably, the pretreatment steps, applied in the NMT process comprise one or more pretreatment steps selected from the group consisting of
- treatment with a degreasing agent;
- treatment with an alkaline etching material;
- treatment with an acid neutralizing agent;
- treatment with an aqueous solution of a water soluble amine;
- treatment with an oxidative component;
- an anodizing step; and
- treatment with a primer material.

In the embodiment wherein the NMT process comprises a step comprising treatment with an aqueous solution of a water soluble amine (so called T-treatment), the aqueous solution preferably is an aqueous ammonium or hydrazine solution.

In the embodiment wherein the NMT process comprises a pretreatment step of anodizing the metal substrate, any anodizing agent suitable for this purpose can be used. Preferably, the anodizing agent is selected from the group consisting of chromic acid, phosphoric acid, sulfuric acid, oxalic acid, and boric acid. In case a primer material is used, said primer material is suitably selected from the group consisting of organosilane, titanate, aluminate, phosphate, and zirconate.

The pretreatment process suitably comprises one or more rinsing steps in between subsequent pretreatment steps.

The nano-size surface irregularities suitably comprise asperities, recesses, projections, grains or pores, or any combination thereof. Also suitably, the nano-size surface irregularities have dimensions in the range of 10 - 100 nm. Dimensions include width, length, depth, height, diameter of a part of the irregularity.

According to a preferred embodiment of the process, after the step of forming a plastic structure on the metal substrate, the so-formed plastic-metal hybrid part is subjected to an annealing step, wherein the plastic-metal hybrid part is kept for at least 30 minutes at a temperature between the glass transition temperature and the melting temperature of the polyamide composition.

According to an alternative preferred embodiment of the process, after the step of forming a plastic structure on the metal substrate, the so-formed plastic-metal hybrid part is subjected to an annealing step, wherein the plastic-metal hybrid part is kept for at least 30 minutes at a temperature between 140 °C and 270 °C, preferably between 150°C and 250 °C, or even between 160 °C and 230 °C.

The advantage of the annealing step is that the bonding strength is increased somewhat and that the duration of a sufficient strong bonding strength is prolonged. However, the process according to the present invention already results in an increased bonding without an annealing step. This has an economic advantage over other processes requiring an annealing step.

The metal substrate in the process according to the invention can in principle be any metal substrate that can be modified by a pretreatment process and be overmolded by a plastic material. The metal substrate will typically be selected and shaped according to the requirements of the projected use. Suitably, the metal substrate is a stamped sheet metal substrate. Also the metal of which the metal substrate is composed may be chosen freely. Preferably, the metal substrate is formed from, or consists of a material selected from the group consisting of aluminum, aluminum alloy (for example 5052 aluminum), titanium, titanium alloy, iron, steel (for example stainless steel), magnesium, and magnesium alloy.

The composition used in the process according to the invention, and in the plastic-metal hybrid part according to the invention, comprises a blend of a semi-crystalline semi-aromatic polyamide (sc-PPA) and an amorphous semi-aromatic polyamide (am-PPA). Herein the sc-PPA and the am-PPA can be used in amounts varying over a wide range.

With the term semi-crystalline polyamide is herein understood a polyamide that has crystalline domains as demonstrated by the presence of a melting peak with a melting enthalpy of at least 5J/g. With the term amorphous polyamide is herein understood a polyamide that has no crystalline domains or essentially so, as demonstrated by absence of a melting peak or the presence of a melting peak with a melting enthalpy of less than 5J/g. Herein the melting enthalpy is expressed relative to the weight of the polyamide.

With a semi-aromatic polyamide is herein understood a polyamide derived from monomers comprising at least one monomer containing an aromatic group and at least one aliphatic or cycloaliphatic monomer.

The semi-crystalline semi-aromatic polyamide suitably has a melting temperature around 270°C, or above. Preferably the melting temperature (Tm) is at least 280°C, more preferably in the range of 280 - 350 °C, or even better 300-340 °C. A higher melting temperature can generally be achieved by using a higher content in an aromatic monomer for example terephthalic acid and/or shorter chain diamines in the polyamide. The person skilled in the art of making polyamide molding compositions will be capable of making and selecting such polyamides.

Suitably, the semi-crystalline semi-aromatic polyamide has a melting enthalpy of at least 15 J/g, preferably at least 25 J/g, and more preferably at least 35 J/g. Herein the melting enthalpy is expressed relative to the weight of the semi-crystalline semi-aromatic polyamide.

With the term melting temperature is herein understood the temperature, measured by the DSC method according to ISO-11357-1/3, 2011, on pre-dried samples in an N₂ atmosphere with heating and cooling rate of 10°C/min. Herein Tm has been calculated from the peak value of the highest melting peak in the second heating cycle. With the term melting enthalpy is herein understood the melting enthalpy measured by the DSC method according to ISO-11357-1/3, 2011, on pre-dried samples in an N₂ atmosphere with heating and cooling rate of 10°C/min. Herein the melting enthalpy is measured from the integrated surface below the melting peak(s) in the second heating cycle. With the term glass transition temperature (Tg) is herein understood the temperature, measured by the DSC method according to ISO-11357-1/2, 2011, on pre-dried samples in an N₂ atmosphere with heating and cooling rate of 10°C/min. Herein the Tg is calculated from the value at the peak of the first derivative (with respect of time) of the parent thermal curve corresponding with the inflection point of the parent thermal curve for the second heating cycle. Suitably, the semi-aromatic polyamide used in the present invention is derived from about 10 to about 75 mole % of the monomers containing an aromatic group. Accordingly, preferably about 25 to about 90 mole % of the remaining monomers are aliphatic and/or cycloaliphatic monomers.

Examples of suitable monomers containing aromatic groups are terephthalic acid and its derivatives, isophthalic acid and its derivatives, naphthalene dicarboxylic acid and its derivatives, C₆-C₂₀ aromatic diamines, p-xylylenediamine and m-xylylenediamine.

Preferably, the composition according to the invention comprises a semi-crystalline semi-aromatic polyamide derived from monomers comprising terephthalic acid or one of its derivatives.

The semi-crystalline semi-aromatic polyamide can further contain one or more different monomers, either aromatic, aliphatic or cycloaliphatic. Examples of aliphatic or cycloaliphatic compounds from which the semi-aromatic polyamide may further be derived include aliphatic and cycloaliphatic dicarboxylic acids and its derivatives, aliphatic C₄-C₂₀ alkylenediamines and/or C₆-C₂₀ alicyclic diamines, and amino acids and lactams. Suitable aliphatic dicarboxylic acids are, for example, adipic acid, sebacic acid, azelaic acid and/or dodecanedioic acid. Suitable diamines include butanediamine, hexamethylenediamine; 2 methylpentamethylenediamine; 2-methyloctamethylenediamine; trimethylhexamethylene-diamine; 1,8-diaminooctane, 1,9-diaminononane; 1,10-diaminodecane and 1,12-diaminododecane. Examples of suitable lactams and amino acids are 11-aminododecanoic acid, caprolactam, and laurolactam.

Examples of suitable semi-crystalline semi-aromatic polyamides include poly(m-xylylene adipamide) (polyamide MXD,6), poly(dodecamethylene terephthalamide) (polyamide 12,T), poly(decamethylene terephthalamide) (polyamide 10,T), poly(nonamethylene terephthalamide) (polyamide 9,T), hexamethylene adipamide/hexamethylene terephthalamide copolyamide (polyamide 6,T/6,6), hexamethylene terephthalamide/2-methylpentamethylene terephthalamide copolyamide (polyamide 6,T/D,T), hexamethylene adipamide/hexamethylene terephthalamide/hexamethylene isophthalamide copolyamide (polyamide 6,6/6,T/6,I), poly(caprolactam-hexamethylene terephthalamide) (polyamide 6/6,T), hexamethylene terephthalamide/hexamethylene isophthalamide (6,T/6,I) copolymer, polyamide 10,T/10,12, polyamide 10T/10,10 and the like.

Preferably, the semi-crystalline semi-aromatic polyamide is a polyphthalamide, represented by the notation PA-XT or PA-XT/YT, wherein the polyamide is built from repeat units derived from terephthalic acid (T) and one or more linear aliphatic diamines. Suitable example thereof are PA-8T, PA-9T, PA-10T, PA-11T, PA5T/6T, PA4T/6T, and any copolymers thereof.

In a preferred embodiment of the invention, the semi-crystalline semi-aromatic polyamide has a number average molecular weight (Mn) of more than 5,000 g/mol, preferably in the range of 7,500 - 50,000 g/mol, more preferably 10,000 - 25,000 g/mol. This has the advantage that the composition has a good balance in mechanical properties and flow properties.

Examples of suitable amorphous semi-aromatic polyamides are PA-XI, wherein X is an aliphatic diamine, and amorphous copolyamides thereof (PA-XI/YT), such as PA-6I and PA-8I, and PA-6I/6T or PA-8I/8T (for example PA-6I/6T 70/30).

Preferably, the amorphous semi-aromatic polyamide comprises, or consists of amorphous PA-6I/6T.

Suitably the sc-PPA and the am-PPA are comprised by the polyamide composition in the following amounts:
a. 30 - 90 wt.% of the semi-crystalline semi-aromatic polyamide and
b. 10 - 40 wt.% of the amorphous semi-aromatic polyamide.

Herein the weight percentages wt,% are relative to the total weight of the composition, and the sum of a. and b. is at most 100 wt.%.

Next to the sc-PPA and the am-PPA, the composition may comprise other components.

In a preferred embodiment of the invention the thermoplastic polymer composition comprises a reinforcing agent (component c.). Herein the reinforcing agent suitable comprises fibers (c.1), or fillers (c.2), or a combination thereof. More particular the fibers and fillers are preferably selected from materials consisting of inorganic material. Examples thereof include the following fibrous reinforcing materials: glass fibers, carbon fibers, and mixtures thereof. Examples of suitable inorganic fillers that the composition may comprise, include one or more of glass beads, glass flakes, kaolin, clay, talc, mica, wollastonite, calcium carbonate, silica and potassium titanate.

Fibers are herein understood to be materials having an aspect ratio L/D (length/diameter) of at least 10. Suitably, the fibrous reinforcing agent has an L/D of at least 20. Fillers are herein understood to be materials having an aspect ratio L/D of less than 10. Suitably, the inorganic filler has an L/D of less than 5. In the aspect ratio L/D, L is the length of an individual fiber or particle and D is the diameter or width of an individual fiber or particle.

The reinforcing agent is suitably present in an amount in the range of 5 - 60 wt.%, relative to the total weight of the composition. Suitably, the amount of component c. is in a more restricted range of 10 - 50 wt.%, more particular 20 - 40 wt.%, relative to the total weight of the composition.

In a special embodiment of the present invention, the component c. in the composition comprises 5 - 60 wt.% of a fibrous reinforcing agent (c.1) having an L/D of at least 20 and 0 - 55 wt.% of an inorganic filler (c.2) having an L/D of less than 5, wherein the combined amount of (c.1) and (c.2) is 60 wt.% or less, and wherein the weight percentages are relative to the total weight of the composition.

Preferably, component c. comprises a fibrous reinforcing agent (c.1) and optionally an inorganic filler (c.2), wherein the weight ratio (c.1):(c.2) is in the range of 50:50 - 100:0.

Also preferably, the reinforcing agent comprises, or even consists of glass fibers. In a particular embodiment the composition comprises 5-60 wt.%, of glass fibers, more particularly 10 - 50 wt.%, even more particularly 20 - 40 wt.%, relative to the total weight of the composition.

In a preferred embodiment, the polyamide composition comprises:
a. 30 - 60 wt.% of the semi-crystalline semi-aromatic polyamide;
b. 10 - 30 wt.% of the amorphous semi-aromatic polyamide; and
c. 5 - 60 wt.% of a fibrous reinforcing agent or a filler, or a combination thereof;

Herein the weight percentages wt,% are relative to the total weight of the composition, and the sum of a, b and c is at most 100 wt.%.

The composition can comprise, next to components a., b. and c., one or more further components. Such components may be selected from auxiliary additives and any other component suitable for use in the plastic-metal hybrid part. The amount thereof can also be varied over a wide range. The one or more further components are together referred to as component d.

In this respect the composition suitably comprises at least one component selected from flame retardant synergists and auxiliary additives for thermoplastic molding compositions known by one skilled in the art suitable to improve other properties. Suitable auxiliary additives include acid scavengers, plasticizers, stabilizers (such as, for example, thermal stabilizers, oxidative stabilizers or antioxidants, light stabilizers, UV absorbers and chemical stabilizers), processing aids (such as, for example, mold release agents, nucleating agents, lubricants, blowing agents), pigments and colorants (such as, for example, carbon black, other pigments, dyes), and antistatic agents.

An example of a suitable flame retardant synergist is zinc borate. By the term "zinc borate" is meant one or more compounds having the formula (ZnO)ₓ(B₂O₃)_{Y}(H₂0)_{z}.

Suitably, the amount of component d. is in the range of 0 - 30 wt.%. Correspondingly, the combined amount of a., b. and c. suitably is at least 70 wt.%. Herein all the weight percentages (wt.%) are relative to the total weight of the composition.

The total amount of other components d. can be, for example, about 1 - 2 wt.%, about 5 wt.%, about 10 wt.%, or about 20 wt.%. Preferably, the composition comprises at least one further component, and the amount of d. is in the range of 0.1 - 20 wt.%, more preferably 0.5 - 10 wt.%, or even 1 - 5 wt.%. Correspondingly, a., b. and c. are present in a combined amount in the range of 80 - 99.9 wt.%, 90 - 99.5 wt.%, respectively 95 - 99 wt.%.

In preferred embodiment, the polyamide composition consist of
a. 30 - 60 wt.% of the semi-crystalline semi-aromatic polyamide;
b. 10 - 30 wt.% of the amorphous semi-aromatic polyamide;
c. 10 - 60 wt.% of a fibrous reinforcing agent or a filler, or a combination thereof;
d. 0.1 - 20 wt.% of at least one other component.

Herein the weight percentages wt,% are relative to the total weight of the composition, and the sum of a., b., c. and d. 100 wt.%.

The present invention also relates to a plastic-metal hybrid part comprising a plastic material bonded to a surface area of a metal part, obtained by a nano-molding technology (NMT) process. In the plastic-metal hybrid part according to the invention the plastic material is a polyamide composition comprising a blend of
a. a semi-crystalline semi-aromatic polyamide, and
b. an amorphous semi-aromatic polyamide.

The plastic-metal hybrid part according to the invention may be any metal hybrid part, obtainable by the process according to the invention or any particular or preferred embodiment or modification thereof as described herein above.

The polyamide composition in the plastic-metal hybrid part according to the invention can be any polyamide composition comprising said blend and any particular or preferred embodiment or modification thereof as described herein above.

In a particularly preferred embodiment, the plastic-metal hybrid part has a bonding force between the metal part and the plastic material, measured by the method according to ISO19095 at 23 °C and a tensile speed of 10 mm/min, in the range of 40 - 70 MPa, for example in the range of 45 - 65 MPa. The bonding force can be, for example, about 50 MPa, or about 55 MPa, or below, or between, or above said values. The higher the bonding force the more versatile and flexible the product designer can design the plastic-metal hybrid part.

The invention is further illustrated with the following Examples and Comparative Experiments.

### Materials

- sc-PPA-A: semi-crystalline semi-aromatic polyamide, PA6T/4T/66 based, melting temperature 325 °C, glass transition temperature 125 °C;
- sc-PPA-B: semi-crystalline semi-aromatic polyamide, PA6T/4T based, melting temperature 335 °C, glass transition temperature 150 °C;
- APA: semi-crystalline aliphatic polyamide, PA-46, melting temperature 295 °C
- am-PPA-A: amorphous semi-aromatic polyamide, PA6I6T, glass transition temperature 150 °C;
- am-PPA-B: PA 3426R is an amorphous polyamide, glass transition temperature 125 °C;
- GF: Glass fibers, standard grade for thermoplastic polyamides
- MRA: Acrawax C, Mold release agent
- Impact modifier: Fusabond A560
- Miscellaneous: Auxiliary additives: heat stabilizer (HS) and color master batch Cabot PA3785 (carbon black) (MB)
- Metal plates A:: Aluminum plates, grade Al6063, measuring 18mm×45mm×1.6mm; pretreated by a process comprising: degreasing with ethanol, etching with an alkaline solution, neutralizing with an acidic solution, and fine etching with an aqueous ammonia solution (so-called T-treatment).
- Metal plates B:: Stainless steel plates, grade SUS 304 (an austenitic stainless steel material), measuring 18mm×45mm×1.6mm; pretreated by a process comprising: degreasing with metal cleaner for 5 minutes at about 60 °C, etching with 10% sulfuric acid for about 3 minutes at about 60 °C, hardening with 3% hydrogen peroxide for about 3 minutes at 40 °C, and drying for 15 minutes at for 5 minutes at 90 °C.

### Preparation of compositions

Eight polyamide compositions based on sc-PPA-A were prepared according to the formulations of Comparative Experiments A-C and Examples I-V in Table 1. Two polyamide compositions based on sc-PPA-B were prepared according to the formulations of Comparative Experiment D and Example VI in Table 2. The preparations were carried out in a twin screw extruder using standard compounding conditions.

### Overmolding of metal plates-A with compositions according to Comparative Experiments A-C and Examples I-V

Test samples were prepared by overmolding the metal plates after putting the metal plates in a mold set at 140 °C and injecting the polyamide composition from an injection molding machine at a melt temperature of 20 °C above the melting temperature of the polyamide composition.

After injection molding the polyamide composition and thus forming of the metal hybrid parts, the resulting metal-plastic hybrid parts were demolded. Some plates were further subjected to an annealing step for 1 hour at 170 °C.

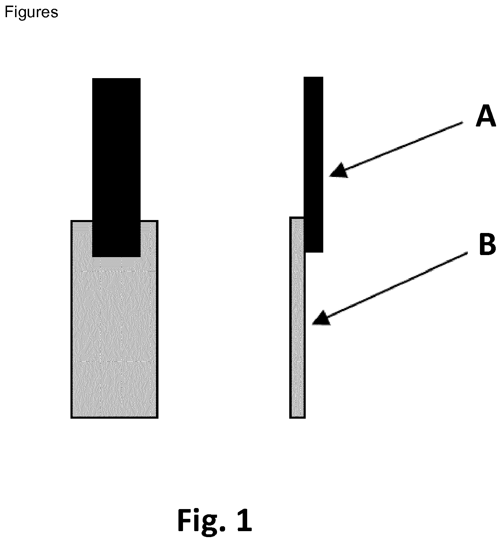

The test samples had the following dimensions: The size of the plates was 18mm×45mm×1.6mm. The size of the plastic part was 10mm×45mm×3mm. The overlapping bonding area was 0.482 cm². The shape and relative position of the metal part and plastic part are schematically shown in Fig 1.

Fig. 1. Schematic representation of the test samples, wherein the black part (A) is the plastic part, and the grey part (B) is the metal part.

### Overmolding of metal plates-B with compositions according to Comparative Experiment D and Example VI.

Test samples were prepared by overmolding the metal plates after putting the metal plates in a mold set at 170 °C and injecting the polyamide composition from an injection molding machine at a melt temperature of 360 °C.

After injection molding the polyamide composition and thus forming of the metal hybrid parts, the resulting metal-plastic hybrid parts were demolded.

The dimensions of the test samples, the size of the plastic part, the overlapping bonding area and the shape and relative position of the metal part and plastic part were as mentioned above for Comparative Experiments A-C and Examples I-V.

### Bonding strength test method.

The bonding strength methods for the adhesion interface in the plastic-metal assemblies was measured by the method according to ISO19095 at 23 °C and a tensile speed of 10 mm/min. The results have been included in Tables 1 and 2.

**Table 1. Compositions and test results for Comparative Experiments A-C and Examples I-V on aluminum plates (metal plates A).**

| **Composition (wt.%)** | **CE-B** | **CE-A** | **EX-I** | **CE-C** | **EX-II** | **EX-III** | **EX-IV** | **EX-V** |
|---|---|---|---|---|---|---|---|---|
| sc-PPA | 62.6 | 68 | 30.6 | 48 | 33.6 | 25.85 | 21.6 | 24 |
| APA | | | 6.8 | | 4.8 | | 4.8 | |
| am-PPA | | | 30.6 | | 9.6 | 21.45 | 21.6 | 24 |
| GF | 30 | 30 | 30 | 50 | 50 | 50 | 50 | 50 |
| MRA | | | | | | 0.3 | | |
| Impact modifier | 5 | | | | | | | |
| Heat stabilizer | 0.4 | | | | | 0.4 | | |
| Color MB | 2 | 2 | 2 | 2 | 2 | 2 | 2 | 2 |
| Functional additive | | | | | | | | |
| Total | 100 | 100 | 100 | 100 | 100 | 100 | 100 | 100 |
| **Test Results** | | | | | | | | |
| Bonding Strength (MPa) | 32.7 | 35.0 | 43.1 | 43.7 | 48.5 | 56.8 | 53.2 | 56.2 |

**Table 2. Compositions and test results for Comparative Experiment D and Example VI on stainless steel plates (metal plates B).**

| **Composition (wt.%)** | **CE-D** | **Ex-VI** |
|---|---|---|
| Sc-PPA-B | 66.2 | 46.34 |
| am-PPA-B | | 19.86 |
| GF | 30 | 30 |
| MRA | 0.3 | 0.3 |
| Color MB | 3.5 | 3.5 |
| Total | 100 | 100 |

| **Test Results** | | |
|---|---|---|
| Bonding strength [MPa] | 13.0 | 47.1 |

The results show that the values for the bonding strength for the compositions according to the invention (Examples I -VI) comprising the amorphous semi-aromatic polyamide are much higher than for those for the corresponding Comparative Experiments A-D.

## Claims

1. Process for manufacturing a plastic-metal hybrid part by plastic overmolding on a metal surface via nano-molding technology (NMT), comprising steps of
i) providing a metal substrate having a surface area with surface irregularities of nano-size dimensions;
ii) providing a polyamide composition;
iii) forming a plastic structure on the metal substrate by molding said polyamide composition directly on at least a part of the surface area with the surface irregularities of the metal substrate;
wherein the polyamide composition comprising
a. a semi-crystalline semi-aromatic polyamide and
b. an amorphous semi-aromatic polyamide.

2. Process according to claim 1, wherein the metal substrate is a stamped sheet metal substrate.

3. Process according to claim 1 or 2, wherein the metal substrate is formed from a material selected from the group consisting of aluminum, aluminum alloy, titanium, titanium alloy, iron, steel, magnesium, and magnesium alloy.

4. Process according to any one of claims 1-3, wherein the process comprises a step prior to step i) of anodizing the metal substrate using an anodizing agent selected from the group consisting of chromic acid, phosphoric acid, sulfuric acid, oxalic acid, and boric acid.

5. Process according to any one of claims 1-4, wherein the polyamide composition comprises
a. 30 - 90 wt.% of the semi-crystalline semi-aromatic polyamide and
b. 10 - 40 wt.% of the amorphous semi-aromatic polyamide;
wherein the weight percentages (wt.%) are relative to the total weight of the composition.

6. Process according to any one of claims 1-5, wherein the polyamide composition comprises
a. 30 - 60 wt.% of the semi-crystalline semi-aromatic polyamide;
b. 10 - 30 wt.% of the amorphous semi-aromatic polyamide; and
c. 5 - 60 wt.% of a fibrous reinforcing agent or a filler, or a combination thereof;
wherein the weight percentages (wt.%) are relative to the total weight of the polyamide composition.

7. Process according to any one of claims 1-6, wherein the polyamide composition consists of
a. 30 - 60 wt.% of the semi-crystalline semi-aromatic polyamide;
b. 10 - 30 wt.% of the amorphous semi-aromatic polyamide;
c. 10 - 60 wt.% of a fibrous reinforcing agent or a filler, or a combination thereof;
d. 0.1 - 20 wt.% of at least one other component;
wherein the weight percentages wt,% are relative to the total weight of the composition.

8. Plastic-metal hybrid part comprising a plastic material bonded to a metal part with a surface area having surface irregularities of nano-size dimensions, wherein the plastic material is a polyamide composition comprising
a. a semi-crystalline semi-aromatic polyamide, and
b. an amorphous semi-aromatic polyamide
wherein the plastic-meal hybrid part is made by plastic overmolding of the plastic material onto the surface of the metal part by nano-molding technology (NMT).

9. Plastic-metal hybrid part according to claim 8, obtainable by the process according to any of claims 1-4.

10. Plastic-metal hybrid part according to claim 8 or 9, wherein the polyamide composition has a composition as defined in any of claims 5-7.

11. Plastic-metal hybrid part according to any of claims 8-10, wherein the plastic-metal hybrid part has a bonding force between the metal part and the plastic material, measured by the method according to ISO19095 at 23 °C and a tensile speed of 10 mm/min, in the range of 40 - 70 MPa.

## Patentansprüche

1. Verfahren zur Herstellung eines Kunststoff-Metall-Hybridteils durch Kunststoff-Überformen auf einer Metalloberfläche durch Nano-Molding-Technologie (NMT), umfassend die Schritte
i) Bereitstellen eines Metallsubstrats, das eine Oberfläche mit Oberflächenunregelmäßigkeiten mit nanoskaligen Abmessungen aufweist;
ii) Bereitstellen einer Polyamidzusammensetzung;
iii) Bilden einer Kunststoffstruktur auf dem Metallsubstrat durch Formen der Polyamidzusammensetzung direkt auf wenigstens einem Teil der Oberfläche des Metallsubstrats mit den Oberflächenunregelmäßigkeiten;
wobei die Polyamidzusammensetzung umfasst:
a. ein halbkristallines halbaromatisches Polyamid und
b. ein amorphes halbaromatisches Polyamid.

2. Verfahren gemäß Anspruch 1, wobei das Metallsubstrat ein gestanztes Metallblechsubstrat ist.

3. Verfahren gemäß Anspruch 1 oder 2, wobei das Metallsubstrat aus einem Material ausgewählt aus der Gruppe bestehend aus Aluminium, Aluminiumlegierung, Titan, Titanlegierung, Eisen, Stahl, Magnesium und Magnesiumlegierung gebildet ist.

4. Verfahren gemäß einem der Ansprüche 1-3, wobei das Verfahren vor Schritt i) einen Schritt des Anodisierens des Metallsubstrats unter Verwendung eines Anodisierungsmittels ausgewählt aus der Gruppe bestehend aus Chromsäure, Phosphorsäure, Schwefelsäure, Oxalsäure und Borsäure umfasst.

5. Verfahren gemäß einem der Ansprüche 1-4, wobei die Polyamidzusammensetzung umfasst:
a. 30-90 Gew.-% an dem halbkristallinen halbaromatischen Polyamid; und
b. 10-40 Gew.-% an dem amorphen halbaromatischen Polyamid;
wobei die Gewichtsprozentwerte (Gew.-%) auf das Gesamtgewicht der Zusammensetzung bezogen sind.

6. Verfahren gemäß einem der Ansprüche 1-5, wobei die Polyamidzusammensetzung umfasst:
a. 30-60 Gew.-% an dem halbkristallinen halbaromatischen Polyamid;
b. 10-30 Gew.-% an dem amorphen halbaromatischen Polyamid; und
c. 5-60 Gew.-% an einem Faserverstärkungsmittel oder einem Füllstoff oder einer Kombination davon;
wobei die Gewichtsprozentwerte (Gew.-%) auf das Gesamtgewicht der Zusammensetzung bezogen sind.

7. Verfahren gemäß einem der Ansprüche 1-6, wobei die Polyamidzusammensetzung aus:
a. 30-60 Gew.-% an dem halbkristallinen halbaromatischen Polyamid;
b. 10-30 Gew.-% an dem amorphen halbaromatischen Polyamid;
c. 10-60 Gew.-% an einem Faserverstärkungsmittel oder einem Füllstoff oder einer Kombination davon;
d. 0,1-20 Gew.-% an wenigstens einer anderen Komponente;
besteht, wobei die Gewichtsprozentwerte, Gew.-%, auf das Gesamtgewicht der Zusammensetzung bezogen sind.

8. Kunststoff-Metall-Hybridteil, umfassend ein Kunststoffmaterial, das an ein Metallteil mit einer Oberfläche, die Oberflächenunregelmäßigkeiten mit nanoskaligen Abmessungen aufweist, gebunden ist, wobei das Kunststoffmaterial eine Polyamidzusammensetzung ist, die umfasst:
a. ein halbkristallines halbaromatisches Polyamid und
b. ein amorphes halbaromatisches Polyamid,
wobei das Kunststoff-Metall-Hybridteil durch Kunststoff-Überformen des Kunststoffmaterials auf die Oberfläche des Metallteils durch Nano-Molding-Technologie (NMT) hergestellt ist.

9. Kunststoff-Metall-Hybridteil gemäß Anspruch 8, erhältlich durch das Verfahren gemäß einem der Ansprüche 1-4.

10. Kunststoff-Metall-Hybridteil gemäß Anspruch 8 oder 9, wobei die Polyamidzusammensetzung eine Zusammensetzung gemäß einem der Ansprüche 5-7 aufweist.

11. Kunststoff-Metall-Hybridteil gemäß einem der Ansprüche 8-10, wobei das Kunststoff-Metall-Hybridteil eine Bindungskraft zwischen dem Metallteil und dem Kunststoffmaterial, gemessen durch das Verfahren gemäß ISO 19095 bei 23 °C und einer Zuggeschwindigkeit von 10 mm/min, in dem Bereich von 40-70 MPa aufweist.

## Revendications

1. Procédé pour la fabrication d'une pièce hybride de plastique-métal par surmoulage de plastique sur une surface métallique via une technologie de nano-moulage (NMT), comprenant les étapes de
i) mise à disposition d'un substrat métallique possédant une zone de surface dotée d'irrégularités de surface de dimensions nanométriques ;
ii) mise à disposition d'une composition de polyamide ;
iii) formation d'une structure de plastique sur le substrat métallique par moulage de ladite composition de polyamide directement sur au moins une partie de la zone de surface dotée des irrégularités de surface du substrat métallique ;
la composition de polyamide comprenant
a. un polyamide semi-aromatique semi-cristallin et
b. un polyamide semi-aromatique amorphe.

2. Procédé selon la revendication 1, le substrat métallique étant un substrat de métal en feuille estampé.

3. Procédé selon la revendication 1 ou 2, le substrat métallique étant formé à partir d'un matériau choisi dans le groupe constitué par l'aluminium, un alliage d'aluminium, le titane, un alliage de titane, le fer, l'acier, le magnésium, et un alliage de magnésium.

4. Procédé selon l'une quelconque des revendications 1 à 3, le procédé comprenant une étape avant l'étape i) d'anodisation du substrat métallique à l'aide d'un agent d'anodisation choisi dans le groupe constitué par l'acide chromique, l'acide phosphorique, l'acide sulfurique, l'acide oxalique, et l'acide borique.

5. Procédé selon l'une quelconque des revendications 1 à 4, la composition de polyamide comprenant
a. 30 à 90 % en poids du polyamide semi-aromatique semi-cristallin et
b. 10 à 40 % en poids du polyamide semi-aromatique amorphe ;
les pourcentages en poids (% en poids) étant par rapport au poids total de la composition.

6. Procédé selon l'une quelconque des revendications 1 à 5, la composition de polyamide comprenant
a. 30 à 60 % en poids du polyamide semi-aromatique semi-cristallin ;
b. 10 à 30 % en poids du polyamide semi-aromatique amorphe ; et
c. 5 à 60 % en poids d'un agent de renforcement fibreux ou d'une charge, ou d'une combinaison correspondante ;
les pourcentages en poids (% en poids) étant par rapport au poids total de la composition de polyamide.

7. Procédé selon l'une quelconque des revendications 1 à 6, la composition de polyamide comprenant
a. 30 à 60 % en poids du polyamide semi-aromatique semi-cristallin ;
b. 10 à 30 % en poids du polyamide semi-aromatique amorphe ;
c. 10 à 60 % en poids d'un agent de renforcement fibreux ou d'une charge, ou d'une combinaison correspondante ;
d. 0,1 à 20 % en poids d'au moins un autre composant ;
les pourcentages en poids, % en poids étant par rapport au poids total de la composition.

8. Pièce hybride de plastique-métal comprenant un matériau de plastique lié à une pièce métallique dotée d'une zone de surface possédant des irrégularités de surface de dimensions nanométriques, le matériau de plastique étant une composition de polyamide comprenant
a. un polyamide semi-cristallin semi-aromatique, et
b. un polyamide semi-aromatique amorphe
la pièce hybride de plastique-métal étant faite par surmoulage de plastique du matériau de plastique sur la surface de la pièce métallique par une technologie de nano-moulage (NMT).

9. Pièce hybride de plastique-métal selon la revendication 8, qui peut être obtenue par le procédé selon l'une quelconque des revendications 1 à 4.

10. Pièce hybride de plastique-métal selon la revendication 8 ou 9, la composition de polyamide possédant une composition telle que définie dans l'une quelconque des revendications 5 à 7.

11. Pièce hybride de plastique-métal selon l'une quelconque des revendications 8 à 10, la pièce hybride de plastique-métal possédant une force de liaison entre la pièce métallique et le matériau de plastique, mesurée par le procédé selon la norme ISO 19095 à 23 °C et à une vitesse de traction de 10 mm/min, dans la plage de 40 à 70 MPa.
